# EUROPÄISCHE PATENTSCHRIFT

(11) **EP 3 315 728 B1**
(45) Veröffentlichungstag und Bekanntmachung des Hinweises auf die Patenterteilung: **12.01.2022**
(21) Anmeldenummer: 16195673.5
(22) Anmeldetag: 26.10.2016
(51) Int. Cl.: F01D 9/04, F01D 17/16, F04D 29/56, F01D 25/06

(54) **GEDÄMPFTE LEITSCHAUFELLAGERUNG**
DAMPED GUIDE VANE BEARING
PALIER AMORTI D'AUBE DIRECTRICE

(43) Veröffentlichungstag der Anmeldung: 02.05.2018
(73) Patentinhaber: MTU Aero Engines AG, 80995 München (DE)
(72) Erfinder: Humhauser, Werner, 85368 Moosburg (DE)

(56) Entgegenhaltungen:
- EP-A1- 2 787 180
- EP-A2- 1 441 108
- WO-A1-2011/015767
- FR-A- 1 523 147

## Beschreibung

Die vorliegende Erfindung betrifft einen Leitschaufelkranz für eine Strömungsmaschine, eine Strömungsmaschine und ein Verfahren zur Montage eines Leitschaufelkranzes.

Strömungsmaschinen wie Flugzeugtriebwerke und stationäre Gasturbinen haben zur Einstellung optimaler Betriebsbedingungen häufig mindestens einen Leitschaufelkranz. Dieser umfasst einen Innenring und eine Mehrzahl an Leitschaufeln, deren eines Ende am Innenring angeordnet ist und die sich von diesem ausgehend radial nach außen erstrecken; die Bezeichnungen "radial", "axial" und "in Umfangsrichtung" beziehen sich in dieser Schrift - sofern nichts anderes angegeben ist - stets auf eine zentrale geometrische Achse des Leitschaufelkranzes bzw. des Innenrings, was zur besseren Lesbarkeit nicht immer extra ausformuliert ist. Sofern sich die jeweiligen Angaben auf Einzelteile des Leitschaufelkranzes beziehen, sind sie in Bezug auf die vorgesehene Ausrichtung des jeweiligen Einzelteils im Leitschaufelkranz zu verstehen.

Ein Leitschaufelkranz kann insbesondere verstellbar ausgebildet sein: In diesem Falle sind die Leitschaufeln um eine vorgesehene Verschwenkungsachse verschwenkbar, die im Allgemeinen mit einer Längsachse der Leitschaufeln übereinstimmt und im Wesentlichen radial verläuft.

Die Verschwenkung kann über äußere Verstellkomponenten an den Leitschaufeln, insbesondere mittels Verstellzapfen erfolgen, die in zugehörige Aufnahmen des Gehäuses eingesetzt bzw. einzusetzen sind und die dann mit einer entsprechenden Verstelleinrichtung am äußeren Gehäuse zusammenwirken können.

Eine innere Stabilisierung der Leitschaufeln erfolgt bei bekannten Leitschaufelkränzen häufig über Lagerzapfen, die sich von einem jeweiligen Leitschaufelteller radial nach innen erstrecken und die in Lagerbuchsen des Innenrings geführt sein können.

In der EP 2 696 041 A1 wird ein verstellbarer Leitschaufelkranz vorgeschlagen, bei dem die Leitschaufeln jeweils in einem einzelnen Lagerkörper gelagert sind und der Innenring aus zwei Halbringen zusammengesetzt ist, die bei der Montage in Umfangsrichtung auf die Lagerkörper aufgeschoben wurden. Die Lagerkörper können dabei einen jeweils quaderförmigen Grundkörper haben, der eine entsprechende Lagerbohrung aufweist. Ein derartiger Leitschaufelkranz bietet insbesondere die Vorteile einer einfachen Montage und geringer Leckage. Die EP 2 696 041 A1 weist alle Merkmale des Oberbegriffs des Anspruchs 1 auf.

Aus der EP 2 787 180 A1 ist eine Leitschaufelanordnung für eine Turbomaschine bekannt, bei der eine Verbindung zwischen einem Endabschnitt der Leitschaufelanordnung und einem Dichtungsträger eine Keilverbindung aufweist.

Die WO 2011/015767 A1, die EP 1 441 108 A2 und die FR 1 523 147 A betreffen blattförmige Federelemente, die bei der Montage und Halterung von nichtverstellbaren Leitschaufeln Anwendung finden.

Die vorliegende Erfindung hat die Aufgabe, einen vorteilhaften Leitschaufelkranz anzugeben; es sollen insbesondere die vorstehend diskutierten Vorteile erhalten und zugleich die Haltbarkeit und die Vermeidung von Leckage weiter verbessert werden können.

Die Aufgabe wird gelöst durch einen Leitschaufelkranz für eine Strömungsmaschine gemäß Anspruch 1. Vorteilhafte Ausführungsformen sind in den Unteransprüchen, der Beschreibung und den Figuren offenbart.

Ein erfindungsgemäßer Leitschaufelkranz für eine Strömungsmaschine umfasst einen Innenring mit einer in Umfangsrichtung verlaufenden Aufnahmerinne, ferner eine Mehrzahl an Leitschaufeln und eine Mehrzahl an Lagerkörpern, die der Aufnahmerinne des Innenrings angeordnet sind und in die ein radial inneres Ende (beispielsweise ein Lagerungselement wie insbesondere ein Lagerzapfen) der Leitschaufeln jeweils einsteckt ist. Darüber hinaus umfasst der Leitschaufelkranz mindestens ein Dämpfungselement, das in der Aufnahmerinne zwischen den Lagerkörpern und dem Innenring angeordnet ist.

Der Leitschaufelkranz kann für eine Verdichter- oder für eine Turbinenstufe der Strömungsmaschine vorgesehen sein.

Die radial inneren Enden der Leitschaufeln können in einen jeweils eigenen, zugeordneten Lagerkörper eingesteckt sein und/oder der Leitschaufelkranz kann Leitschaufeln umfassen, deren radial innere Enden in einen gemeinsamen Lagerkörper eingesteckt sind (z.B. zu zweit, zu dritt oder mit mehr Leitschaufeln). Insbesondere kann der Leitschaufelkranz genauso viele Lagerkörper umfassen wie Leitschaufeln oder weniger Lagerkörper als Leitschaufeln.

Das mindestens eine Dämpfungselement dient einer Dämpfung von Relativbewegungen zwischen den Lagerkörpern und dem Innenring bzw. zwischen Leitschaufeln und Innenring. Insbesondere können so Schwingungsamplituden der Leitschaufeln reduziert werden, die sich aus den genannten Relativbewegungen ergeben können. Die genannten Relativbewegungen bzw. Schwingungen resultieren insbesondere aus Vibrationen im Betrieb der Strömungsmaschine, und sie können zu Verschleiß und Beeinträchtigungen des Wirkungsgrads der Strömungsmaschine führen. Insbesondere kann mit dem mindestens einen Dämpfungselement daher einer Materialermüdung der Leitschaufeln durch Langzeitbelastung entgegengewirkt werden.

Vorzugsweise ist der Innenring aus zwei oder mehr Innenringsegmenten zusammengesetzt. Ein derartiges Innenringsegment weist vorzugsweise an mindestens einem seiner Enden in Umfangsrichtung eine Eintrittsöffnung in die Aufnahmerinne auf, durch die hindurch mehrere der Lagerkörper nacheinander auf das Innenringsegment aufgefädelt werden können (beispielsweise indem das Innenringsegment auf die Lagerkörper aufgeschoben oder - gezogen wird).

Ein erfindungsgemäßes Verfahren dient der Montage eines Leitschaufelkranzes, beispielsweise eines Leitschaufelkranzes gemäß einer der in dieser Schrift offenbarten Ausführungsformen; insbesondere können die verschiedenen Einzelteile bzw. Merkmale die in dieser Schrift genannten speziellen Eigenschaften aufweisen. Das Verfahren umfasst ein Einsetzen mindestens eines Dämpfungselements in eine Aufnahmerinne eines Innenringsegments, die (bezogen auf eine zentrale Achse des Leitschaufelkranzes bzw. des Innenringsegments) in Umfangsrichtung verläuft. Das Verfahren umfasst ferner ein Auffädeln der Mehrzahl an Lagerelementen, in die jeweils ein radial inneres Ende einer Leitschaufel eingesetzt ist, auf das Innenringsegment, und zwar in dessen Aufnahmerinne mit dem darin eingesetzten mindestens einen Dämpfungselement. Danach wird das Innenringsegment mit mindestens einem weiteren Innenringsegment zu einem Innenring zusammengesetzt.

Vorzugsweise sind die Leitschaufeln beim Auffädeln radial außen jeweils an einem Gehäuse fixiert, beispielsweise indem ein Verstellzapfen der Leitschaufeln jeweils in eine Aufnahme am Gehäuse eingesetzt ist. Das Auffädeln kann dann ein Aufschieben bzw. Aufziehen des Innenringsegments über die radial nach innen ragenden Enden der Leitschaufeln mit ihren jeweiligen Lagerkörpern umfassen.

Eine Montage mittels eines derartigen Verfahrens ist besonders einfach und ermöglicht einen strukturmechanisch vorteilhaften Leitschaufelkranz, bei dem Relativbewegungen von Leitschaufeln und Innenring gering gehalten werden. So können Verschleiß und Materialermüdung minimiert werden.

Gemäß einer bevorzugten Ausführungsform weist ein erfindungsgemäßer Leitschaufelkranz eine Dichtung zum Abdichten eines Radialspaltes zwischen Innenring und einem gegenüberliegenden Rotorabschnitt auf; der Innenring kann dabei als Dichtungsträger fungieren. Die Dichtung (die beispielsweise ein Einlaufbelag, insbesondere eine Honigwabendichtung sein kann, oder eine Bürsten- oder Dichtlippendichtung) kann an einer der Aufnahmerinne radial gegenüberliegenden Oberfläche des Innenrings befestigt oder monolithisch angeformt sein bzw. (bei einem erfindungsgemäßen Verfahren) angeformt werden.

Das mindestens eine Dämpfungselement ist in radialer Richtung zwischen Lagerkörpern und Innenring angeordnet . Gemäß einer vorteilhaften Ausführungsform ist das mindestens eine Dämpfungselement vollständig oder teilweise radial weiter innen angeordnet als die Lagerkörper, beispielsweise in einem vorgesehenen Spalt am Boden der Aufnahme. Es ist flexibel als ein Federelement ausgebildet, dessen Federkraft den Innenring und mindestens eines der Lagerelemente an der Position des Federelements auseinanderdrückt (und damit an anderer Stelle gegeneinanderdrückt). Ein derartiger Leitschaufelkranz ist besonders einfach zu montieren, weil die Lagerkörper bei gespanntem Federelement eingesetzt werden können und bei entspanntem Federelement von diesem gegen einen Bereich des Innenrings gedrückt werden, so dass ein vorhandener Spalt abgedichtet werden kann.

Gemäß einer vorteilhaften Ausführungsform der vorliegenden Erfindung sind die Lagerelemente mit dem Innenring formschlüssig verbunden, vorzugsweise in axialer und/oder in radialer Richtung. Insbesondere kann eine seitliche Wandung der Aufnahmerinne (die also die Aufnahmerinne in axialer Richtung begrenzt) mindestens eine in Umfangsrichtung verlaufende Nut umfassen, in die ein entsprechender Vorsprung mindestens eines der Lagerkörper eingreift.

Gemäß der Erfindung weist das mindestens eine Dämpfungselement ein jeweiliges Befestigungsmittel auf, das dazu eingerichtet ist, das Dämpfungselement vor einem Einsetzen der Lagerkörper in der Aufnahmerinne zu fixieren: dadurch wird die Montage des Innenrings vereinfacht. Ein derartiges Befestigungsmittel kann beispielsweise eine Nut in einer seitlichen Wandung der Aufnahmerinne (die also die Aufnahmerinne in axialer Richtung begrenzt) umfassen, in die ein axialer Randabschnitt des Dämpfungselements mindestens teilweise eingeschoben ist. Alternativ ist das Dämpfungselement an mindestens einem der Lagerkörper befestigt .

Vorteilhaft ist eine Ausführungsform, bei der das mindestens eine Dämpfungselement als ein Ring oder als ein Ringsegment ausgebildet ist, der bzw. das in der Aufnahmerinne in Umfangsrichtung verläuft; ein derartiges Ringsegment kann beispielsweise einen Achsenwinkel (an der zentralen Achse) von 180°, 120° oder 90° umfassen. Das Dämpfungselement kann beispielsweise mindestens einen Streifen aus nachgiebigem Material aufweisen, dessen Enden miteinander oder jeweils mit einem Ende eines weiteren Streifens verbunden sind bzw. werden (vorzugsweise nach dem Einlegen in die Aufnahmerinne). Gemäß einem speziellen Ausführungsbeispiel umfasst das Dämpfungselement einen in radialer Richtung gewölbten Metallblechstreifen.

Der Innenring und/oder das mindestens eine Dämpfungselement können/kann in einem Kontaktbereich miteinander eine Mehrzahl an Unebenheiten und/oder eine raue Oberfläche aufweisen. Auf diese Weise kann eine besonders gute Angriffsfläche für das Dämpfungselement und damit ein besonders guter Dämpfungseffekt realisiert werden, insbesondere kann eine Relativbewegung von Dämpfungselement und Innenring minimiert werden.

Analog können/kann (alternativ oder zusätzlich) das mindestens eine Dämpfungselement und/oder mindestens einer der Lagerkörper in einem Kontaktbereich (von Dämpfungselement und Lagerkörper) eine Mehrzahl an Unebenheiten und/oder ein raue Oberfläche aufweisen. Dadurch kann eine Relativbewegung von Dämpfungselement und Lagerkörper minimiert werden.

Eine erfindungsgemäße Strömungsmaschine umfasst wenigstens eine Verdichter- und/oder Turbinenstufe, die mindestens einen erfindungsgemäßen Leitschaufelkranz gemäß einer der in dieser Schrift offenbarten Ausführungsformen umfasst. Die Strömungsmaschine kann insbesondere ein Flugtriebwerk sein.

Im Folgenden werden bevorzugte Ausführungsbeispiele der Erfindung anhand einer Zeichnung näher erläutert. Es versteht sich, dass einzelne Elemente und Komponenten auch anders kombiniert werden können als dargestellt.

Es zeigt schematisch:

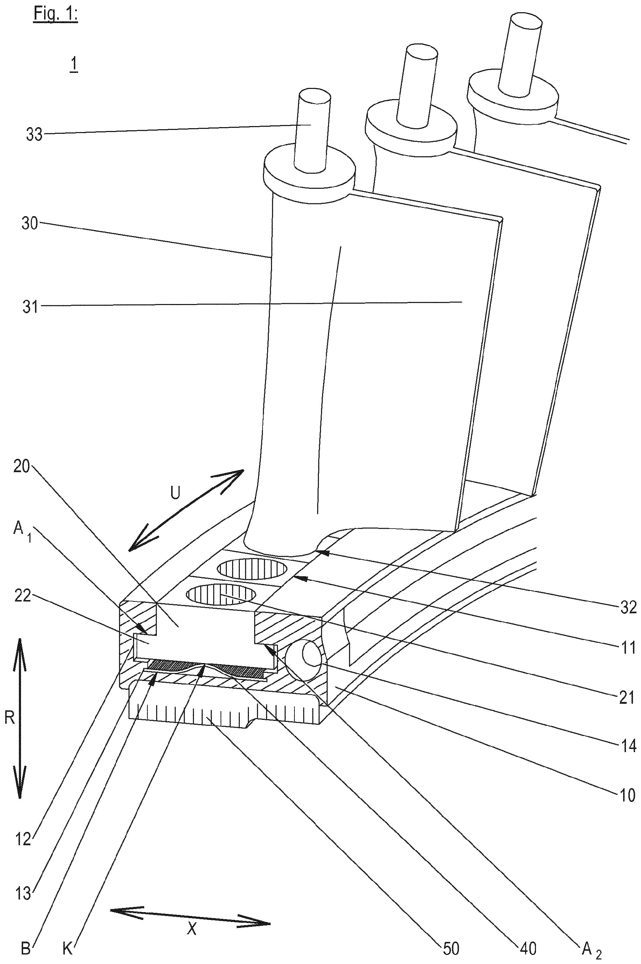

- Figur 1:: einen Teil eines exemplarischen erfindungsgemäßen Leitschaufelkranzes in perspektivischer Darstellung;

In Figur 1 ist ein verstellbarer Leitschaufelkranz 1 gemäß einer Ausführungsform der vorliegenden Erfindung teilweise dargestellt. Der Leitschaufelkranz umfasst einen Innenring 10, der aus mehreren (z.B. zwei) Innenringsegmenten zusammengesetzt ist; in der Figur gezeigt ist lediglich ein Teil des Innenrings 10, nämlich ein Ende eines Innenringsegments, das eine Bohrung 14 zur Verbindung (mittels eines hindurchzuführenden, nicht dargestellten Stiftes) mit einem Ende eines anderen Ringsegments aufweist. Das Innenringsegment weist an dem gezeigten Ende eine Eintrittsöffnung in eine in Umfangsrichtung U verlaufende Aufnahmerinne 11 für Lagerkörper 20 auf; bei der Montage können durch diese Eintrittsöffnung hindurch die Lagerkörper nacheinander auf das Innenringsegment aufgefädelt werden. Im in der Figur gezeigten Ausführungsbeispiel ist dieses Auffädeln bereits erfolgt, und die Lagerkörper 20, die in radial verlaufenden, ebenen Flächen aneinander angrenzen, befinden sich in einer Reihe in der Aufnahmerinne 11.

Der Leitschaufelkranz 1 umfasst weiterhin eine Mehrzahl an Leitschaufeln 30, die jeweils mit ihrem radial inneren Ende 32 (das vorzugsweise ein Lagerelement wie beispielsweise einen Lagerzapfen umfasst) in einen zugehörigen Lagerkörper 20 (d.h. in eine darin befindliche Bohrung 21) eingesteckt sind. Das jeweilige Ende der Leitschaufeln und/oder eine Oberfläche der Lagerkörper in der Bohrung können/kann zur Reduktion von Reibung und/oder Verschleiß beschichtet sein. In der Figur sind die beiden vordersten Lagerkörper zur Verdeutlichung unbestückt dargestellt, d.h. jeweils ohne ein eingestecktes Ende einer Leitschaufel.

Die Leitschaufeln weisen jeweils ein Schaufelblatt 31 auf und können über einen Verstellzapfen 33 verschwenkt werden, der dazu eingerichtet ist, in entsprechende Aufnahmen eines (nicht dargestellten) Gehäuses eingesteckt zu werden.

Lagerkörper 20 und Innenring 10 sind in dem in der Figur dargestellten Ausführungsbeispiel formschlüssig miteinander verbunden, und zwar vorliegend sowohl in axialer Richtung X als auch in radialer Richtung R. Dazu weist jede der beiden seitlichen Wandungen der Aufnahmerinne 11 eine Nut 12 auf, in die ein entsprechender Vorsprung 22 der Lagerkörper 20 jeweils eingesetzt ist.

Der Leitschaufelkranz 1 umfasst zudem ein Dämpfungselement 40, das an einem (radial innen liegenden) Boden der Aufnahme 11 zwischen dem Innenring 10 und den Lagerkörpern 20 angeordnet ist. Es ist als ein Federelement ausgebildet (z.B. in Form eines Metallblechs), dessen Federkraft die Lagerkörper 20 radial nach außen drückt; im gezeigten Beispiel ist das Dämpfungselement als ein Streifen ausgebildet, der in seinem zentralen, nachgiebigen Bereich radial nach innen gewölbt ist. Dadurch werden die Lagerkörper im gezeigten Beispiel mit ihren Vorsprüngen 22 gegen einen entsprechenden Bereich A₁, A₂ des Innenrings 10 gedrückt, was die Reibung zwischen Lagerkörpern und Innenring in diesen Bereichen verstärkt und so eine Relativbewegung zwischen Innenring und Lagerkörpern (und damit eine Relativbewegung zwischen Innenring und Leitschaufeln) dämpft.

Die Aufnahmerinne 11 weist als ein Befestigungsmittel für das Dämpfungselement 40 (in Umfangsrichtung betrachtet) an beiden Seiten eine Nut 13 auf, in die jeweils ein Randabschnitt des Dämpfungselements 40 eingesetzt (z.B. eingeschoben oder eingezogen) ist. Dies erleichtert die Handhabung bei der Montage, weil das Dämpfungselement nicht aus der Aufnahmerinne 11 fällt, solange die Lagerkörper 20 noch nicht eingesetzt sind.

In einem Kontaktbereich B von Innenring 10 und Dämpfungselement 40 kann die Oberfläche des Innenrings (in der Aufnahme) und/oder die Oberfläche des Dämpfungselements 40 vorzugsweise eine Mehrzahl an Unebenheiten aufweisen und/oder rau ausgebildet sein. Dadurch kann eine Relativbewegung zwischen Innenring 10 und Dämpfungselement 40 vermindert werden.

Alternativ oder zusätzlich kann in einem Kontaktbereich K von Dämpfungselement 40 und Lagerkörpern 20 die Oberfläche des Dämpfungselements und/oder die Oberfläche mindestens eines der Lagerkörper 20 vorzugsweise eine Mehrzahl an Unebenheiten aufweisen und/oder rau ausgebildet sein. Dadurch kann eine Relativbewegung zwischen Dämpfungselement 40 und Lagerkörpern 20 reduziert werden.

Im gezeigten Ausführungsbeispiel umfasst der Leitschaufelkranz 1 eine (vorliegend als Einlaufbelag ausgebildete) Dichtung 50 zum Abdichten eines Radialspaltes zwischen Innenring und einem (nicht dargestellten) gegenüberliegenden Rotorabschnitt. Der Innenring 10 wirkt dabei als ein Dichtungsträger.

Ein erfindungsgemäßer Leitschaufelkranz 1 umfasst einen Innenring 10 und eine Mehrzahl an Leitschaufeln 30. Ein radial inneres Ende 32 der Leitschaufeln ist dabei jeweils in einen Lagerkörper 20 eingesteckt, und der Innenring weist (an seiner radial äußeren Oberfläche) eine in Umfangsrichtung U verlaufende Aufnahmerinne 11 für die Lagerkörper auf. Der Leitschaufelkranz umfasst zudem mindestens ein Dämpfungselement 40, das in der Aufnahmerinne 11 zwischen den Lagerkörpern 20 und dem Innenring 10 angeordnet ist.

Ein erfindungsgemäßes Verfahren dient zur Montage eines Leitschaufelkranzes. Dabei werden ein Dämpfungselement 40 in eine Aufnahmerinne 11 eines Innenringsegments eingesetzt und eine Mehrzahl an Lagerelementen 20 in der Aufnahmerinne des Innenringsegments aufgefädelt. Danach wird das Innenringsegment mit mindestens einem weiteren Innenringsegment zu einem Innenring verbunden.

### Bezugszeichen

- 1: Leitschaufelkranz

- 10: Innenring
- 11: Aufnahmerinne
- 12: Nut für Vorsprung 22 am Lagerkörper
- 13: Nut für Randabschnitt des Dämpfungselements 40
- 14: Bohrung zur Verbindung von Ringsegmenten

- 20: Lagerkörper
- 21: Bohrung
- 22: Vorsprung

- 30: Leitschaufel
- 31: Schaufelblatt
- 32: radial inneres Ende der Leitschaufel
- 33: Verstellzapfen

- 40: Dämpfungselement

- 50: Dichtung

- A₁, A₂: Bereich des Innenrings
- B: Kontaktbereich von Innenring und Dämpfungselement
- K: Kontaktbereich von Dämpfungselement und Lagerkörpern

- R: radiale Richtung
- U: Umfangsrichtung
- X: axiale Richtung

## Patentansprüche

1. Leitschaufelkranz (1) für eine Strömungsmaschine, der umfasst:
einen Innenring (10), an dessen radial äußerer Oberfläche eine Aufnahmerinne (11) in Umfangsrichtung (U) verläuft;
eine Mehrzahl an Lagerkörpern (20), die in der Aufnahmerinne des Innenrings angeordnet sind;
eine Mehrzahl an Leitschaufeln (30), die jeweils mit ihrem radial inneren Ende (32) in einen der Lagerkörper einsteckt sind; **dadurch gekennzeichnet, dass**
ein Dämpfungselement (40) als Federelement ausgebildet ist und in der Aufnahmerinne zwischen den Lagerkörpern (20) und dem Innenring (10) angeordnet ist,
wobei das Dämpfungselement (40) in radialer Richtung zwischen Lagerkörpern und Innenring angeordnet ist,
wobei die Federkraft des als Federelement ausgebildeten Dämpfungselements (40) die Lagerkörper (20) nach radial außen drückt,
wobei das mindestens eine Dämpfungselement (40) am Innenring (10) oder an einem oder mehreren der Lagerkörper (20) befestigt ist.

2. Leitschaufelkranz gemäß Anspruch 1, wobei die Lagerelemente (20) mit dem Innenring (10) formschlüssig verbunden sind.

3. Leitschaufelkranz gemäß einem der Ansprüche 1 oder 2, wobei die Federkraft des Dämpfungselements (40), das als Federelement ausgebildet ist, den Innenring und mindestens eines der Lagerelemente in mindestens einem Abschnitt (A₁, A₂) aneinanderdrückt.

4. Leitschaufelkranz gemäß einem der vorhergehenden Ansprüche, wobei das Dämpfungselement (40) mindestens teilweise aus Metall besteht.

5. Leitschaufelkranz gemäß einem der vorhergehenden Ansprüche, wobei das Dämpfungselement (40) als ein Ring oder als ein Ringsegment ausgebildet ist, der bzw. das in der Aufnahmerinne (11) in Umfangsrichtung (U) verläuft.

6. Leitschaufelkranz gemäß einem der vorhergehenden Ansprüche, wobei der Innenring (10) in einem Kontaktbereich (B) mit dem Dämpfungselement (40) eine Mehrzahl an Unebenheiten aufweist.

7. Leitschaufelkranz gemäß einem der vorhergehenden Ansprüche, wobei das Dämpfungselement (40) in einem Kontaktbereich (B) mit dem Innenring (10) eine Mehrzahl an Unebenheiten aufweist.

8. Strömungsmaschine mit einem Leitschaufelkranz (1) gemäß einem der Ansprüche 1 bis 7.

9. Verfahren zur Montage eines Leitschaufelkranzes (1) gemäß einem der Ansprüche 1 bis 7, das umfasst:
ein Einsetzen mindestens eines Dämpfungselements (40) in eine Aufnahmerinne (11) eines Innenringsegments, die in Umfangsrichtung (U) verläuft;
ein Auffädeln der Mehrzahl an Lagerelementen (20) in der Aufnahmerinne des Innenringsegments mit dem darin eingesetzten mindestens einen Dämpfungselement derart, dass das Dämpfungselement (40) in radialer Richtung zwischen Lagerkörpern und Innenring angeordnet wird; und danach
ein Verbinden des Innenringsegments mit mindestens einem weiteren Innenringsegment zu einem Innenring.

## Claims

1. Guide vane ring (1)for a turbomachine, comprising:
an inner ring (10), on the radially outer surface of which a receiving channel (11) extends in the circumferential direction (U);
a plurality of bearing bodies (20) which are arranged in the receiving channel of the inner ring;
a plurality of guide vanes (30), each of which is inserted at the radially inner end (32) thereof into one of the bearing bodies; **characterized in that**
a damping element (40) is designed as a spring element and is arranged in the receiving channel between the bearing bodies (20) and the inner ring (10),
the damping element (40) being arranged in the radial direction between the bearing bodies and the inner ring,
the spring force of the damping element (40) designed as a spring element pressing the bearing bodies (20) radially outward,
the at least one damping element (40) being attached to the inner ring (10) or to one or more of the bearing bodies (20).

2. Guide vane ring according to claim 1, wherein the bearing elements (20) are connected to the inner ring (10) in a form-fitting manner.

3. Guide vane ring according to either claim 1 or claim 2, wherein the spring force of the damping element (40), which is designed as a spring element, presses the inner ring and at least one of the bearing elements against one another in at least one portion (A₁, A₂).

4. Guide vane ring according to any of the preceding claims, wherein the damping element (40) consists at least partially of metal.

5. Guide vane ring according to any of the preceding claims, wherein the damping element (40) is designed as a ring or as a ring segment which extends in the receiving channel (11) in the circumferential direction (U).

6. Guide vane ring according to any of the preceding claims, wherein the inner ring (10) has a plurality of irregularities in a contact region (B) with the damping element (40).

7. Guide vane ring according to any of the preceding claims, wherein the damping element (40) has a plurality of irregularities in a contact region (B) with the inner ring (10).

8. Turbomachine comprising a guide vane ring (1) according to any of claims 1 to 7.

9. Method for assembling a guide vane ring (1) according to any of claims 1 to 7, comprising:
inserting at least one damping element (40) into a receiving channel (11) of an inner ring segment, which receiving channel extends in the circumferential direction (U);
threading the plurality of bearing elements (20) into th e receiving channel of the inner ring segment with the at least one damping element inserted therein in such a way that the damping element (40) is arranged in the radial direction between the bearing bodies and the inner ring; and then
connecting the inner ring segment to at least one further inner ring segment to form an inner ring.

## Revendications

1. Couronne d'aube directrice (1) destinée à une turbomachine et comprenant :
une bague intérieure (10), sur la surface radialement extérieure de laquelle s'étend une rainure de réception (11) dans la direction circonférentielle (U) ;
une pluralité de corps de palier (20), lesquels sont disposés dans la rainure de réception de la bague intérieure ;
une pluralité d'aubes directrices (30), lesquelles sont respectivement insérées, au moyen de leur extrémité (32) radialement intérieure, dans l'un des corps de palier ; **caractérisée en ce**
**qu'**un élément d'amortissement (40) est conçu comme un élément à ressort et est disposé dans la rainure de réception entre les corps de palier (20) et la bague intérieure (10),
dans laquelle l'élément d'amortissement (40) est disposé dans la direction radiale entre les corps de palier et la bague intérieure,
dans laquelle la force de ressort de l'élément d'amortissement (40) conçu comme un élément à ressort presse le corps de palier (20) radialement vers l'extérieur,
dans laquelle l'au moins un élément d'amortissement (40) est fixé à la bague intérieure (10) ou à un ou plusieurs des corps de palier (20).

2. Couronne d'aube directrice selon la revendication 1, dans laquelle les éléments de palier (20) sont reliés par complémentarité de forme à la bague intérieure (10).

3. Couronne d'aube directrice selon l'une des revendications 1 ou 2, dans laquelle la force de ressort de l'élément d'amortissement (40), lequel est conçu comme un élément à ressort, presse la bague intérieure et au moins l'un des éléments de palier l'un contre l'autre dans au moins une section (A₁, A₂).

4. Couronne d'aube directrice selon l'une des revendications précédentes, dans laquelle l'élément d'amortissement (40) est au moins partiellement en métal.

5. Couronne d'aube directrice selon l'une des revendications précédentes, dans laquelle l'élément d'amortissement (40) est conçu comme une bague ou un segment de bague, qui s'étend dans la rainure de réception (11) dans la direction circonférentielle (U).

6. Couronne d'aube directrice selon l'une des revendications précédentes, dans laquelle la bague intérieure (10) présente une pluralité d'irrégularités dans une zone de contact (B) avec l'élément d'amortissement (40).

7. Couronne d'aube directrice selon l'une des revendications précédentes, dans laquelle l'élément d'amortissement (40) présente une pluralité d'irrégularités dans une zone de contact (B) avec la bague intérieure (10).

8. Turbomachine comportant une couronne d'aube directrice (1) selon l'une des revendications 1 à 7.

9. Procédé d'assemblage d'une couronne d'aube directrice (1) selon l'une des revendications 1 à 7, lequel comprend les étapes :
d'insertion d'au moins un élément d'amortissement (40) dans une rainure de réception (11) d'un segment de bague intérieure, laquelle rainure de réception s'étend dans la direction circonférentielle (U) ;
d'enfilage de la pluralité d'éléments de palier(20) dans la rainure de réception du segment de bague intérieure au moyen de l'au moins un élément d'amortissement inséré à l'intérieur de telle sorte que l'élément d'amortissement (40) est disposé dans la direction radiale entre les corps de palier et la bague intérieure ; puis
de liaison du segment de bague intérieure à au moins un autre segment de bague intérieure afin de former une bague intérieure.
